# EUROPÄISCHE PATENTSCHRIFT

(11) **EP 0 449 862 B1**
(45) Veröffentlichungstag und Bekanntmachung des Hinweises auf die Patenterteilung: **06.04.1994**
(21) Anmeldenummer: 90900142.2
(22) Anmeldetag: 13.12.1989
(51) Int. Cl.: F16H 3/66

(54) **AUTOMATGETRIEBE FÜR KRAFTFAHRZEUGE**
AUTOMATIC GEARBOX FOR MOTOR VEHICLES
TRANSMISSION AUTOMATIQUE POUR VEHICULE AUTOMOBILE

(30) Priorität: 15.12.1988 DE 3842188
(43) Veröffentlichungstag der Anmeldung: 09.10.1991
(73) Patentinhaber: ZF FRIEDRICHSHAFEN Aktiengesellschaft, 88038 Friedrichshafen (DE)
(72) Erfinder: SCHIFFHAUER, Michael, D-7990 Friedrichshafen (DE)
(86) Internationale Anmeldenummer: EP8901532
(87) Internationale Veröffentlichungsnummer: WO9007072

(56) Entgegenhaltungen:
- WO-A-87/00901
- US-A- 3 733 928
- US-A- 4 468 982

## Beschreibung

Die Erfindung bezieht sich auf ein Automatgetriebe für Kraftfahrzeuge mit einem reduzierten Planeten-Koppelgetriebe, dessen Planetenräder eines ersten und zweiten Planetensatzes miteinander kämmen und einen gemeinsamen Steg aufweisen, wobei ein auf einer Hohlwelle drehfestes inneres Zentralrad des ersten Planetensatzes über eine erste Schaltkupplung sowie ein auf einer Zwischenwelle drehfestes Sonnenrad des zweiten Planetensatzes über ein zweite Schaltkupplung wahlweise mit einer Fingangswelle kuppelbar sind bzw. die Zwischenwelle über eine erste Reibbremse abbremsbar ist und wobei der Steg an seinem getriebeeingangsseitigen Ende mit einer zweiten Reibbremse und ein Hohlrad des zweiten Planetensatzes mit einem Abtriebszahnrad des Automatgetriebes verbunden sind, und wobei die Zwischenwelle als zentrische Vollwelle ausgebildet ist, die durch das Abtriebszahnrad hindurchgeführt ist, und die erste Reibbremse an dem sich getriebeausgangsseitig über das Antriebszahnrad hinaus erstreckenden Abschnitt der Zwischenwelle angreift.

Ein Automatgetriebe der vorgenannten Gattung ist bekannt aus der US-A-37 33 928 (Fig. 10). Dabei sind Kupplungen, über die die Hohlwelle und die Zwischenwelle mit der Eingangswelle kuppelbar sind,und die zweite Reibbremse, über die der Steg der beiden Planetensätze festlegbar ist, außerhalb der radialen Kontur des Planeten-Koppelgetriebes angeordnet, so daß sich eine relativ große axiale Baulänge ergibt. Außerdem läßt sich dieses Automatgetriebe nicht in einer als Overdrive ausgebildeten Gangstufe betreiben.

Der Erfindung liegt daher die Aufgabe zugrunde, die genannten Probleme zu beseitigen und folglich die baulichen Abmessungen an einem Automatgetriebe der vorgenannten Gattung und dessen Fertigungsaufwand zu verringern.

Diese Aufgabe wird nach dem kennzeichnenden Teil des Patentanspruchs 1 dadurch gelöst, daß der Steg über eine dritte Schaltkupplung, die in getriebeausgangsseitiger Richtung hinter der ersten und zweiten Kupplung liegt, mit der Eingangswelle verbindbar ist. Dadurch ergibt sich ein klar gegliederter Aufbau der Antriebsverbindung zwischen Eingangswelle und Planeten-Koppelgetriebe mit einem Antrieb des zweiten Planetensatzes über die zweite Schaltkupplung und die zentrale Zwischenwelle, einem Antrieb des ersten Planetensatzes über die erste Schaltkupplung und die die Zwischenwelle umgebende Hohlwelle und schließlich einen Antrieb des gemeinsamen Stegs über die dritte Schaltkupplung.

Weitere vorteilhafte Ausgestaltungen der Erfindung sind in den Unteransprüchen 2 bis 9 beschrieben. So kann gemäß Anspruch 2 die zweite Reibbremse radial zum Planeten-Koppelgetriebe angeordnet sein, wodurch sich die Getriebebaulänge verringern läßt.

Bei der Ausgestaltung der Erfindung nach Anspruch 3 sollen die zweite Reibbremse und die dritte Schaltkupplung einen gemeinsamen Innenlamellenträger aufweisen. Weiterhin können gemäß Anspruch 4 die erste und die dritte Schaltkupplung gegenüber der Eingangswelle einen gemeinsamen Außenlamellenträger aufweisen. Durch die Verwendung gemeinsamer Innen- bzw. Außenlamellenträger tritt eine Reduzierung des Herstellungsaufwandes für das Automatgetriebe ein. Außerdem können für die Schaltkupplungen und Reibbremsen weitgehend baugleiche Reiblamellen verwendet werden. So sollen gemäß Anspruch 5 die Kupplungslamellen der ersten und dritten Schaltkupplung sowie der zweiten Reibbremse identisch ausgebildet sein.

Dem Anspruch 6 zufolge ist ein auf der Eingangswelle angeordnetes Tragelement mit Stellzylindern für die erste und dritte Schaltkupplung sowie die zweite Reibbremse vorgesehen. Gemäß Anspruch 7 soll das Tragelement an seinem äußeren Umfang den Außenlamellenträger für die erste und dritte Schaltkupplung bilden, wobei er in axialer Richtung vorkragt, und es soll jeweils an einer der beiden Stirnseiten des Tragelements ein Stellzylinder für die erste und dritte Schaltkupplung ausgebildet sein. Dieses Tragelement kann somit in vorteilhafter Weise gleichzeitig ein eingangsseitiges Übertragungselement der Schaltkupplungen sein und die Stellzylinder samt der Druckmittelzufuhr aufnehmen. Bei der vorgesehenen gleichzeitigen Anordnung sämtlicher Schaltkupplungen in diesem Tragelement tritt folglich eine erhebliche Vereinfachung bezüglich des Herstellungsaufwands und der Funktionsweise des Automatgetriebes ein.

Abtriebsseitig kann, wie in Anspruch 8 vorgeschlagen, ein Außenlamellenträger der ersten Reibbremse einen sich axial erstreckenden Bund aufweisen, auf dem das Abtriebszahnrad gelagert ist. Folglich ist das Abtriebszahnrad über den Außenlamellenträger unmittelbar im Gehäuse des Automatgetriebes und nicht auf der Zwischenwelle gelagert, so daß an dieser Stelle keine Lagerkräfte auf die Zwischenwelle wirken. Daher kann auf eine entsprechende Dimensionierung der abtriebsseitigen Lagerung der Zwischenwelle verzichtet werden.

Schließlich kann nach Anspruch 9 ein Stellzylinder der zweiten Reibbremse an einer Stirnseite des Außenlamellenträgers der ersten Reibbremse ausgebildet sein. Dieser in das Getriebegehäuse eingesetzte Außenlamellenträger der ersten Reibbremse übernimmt somit gemäß den Ansprüchen 8 und 9 mehrere Funktionen, nämlich die Lagerung der Zwischenwelle, die Aufnahme des Stellzylinders der zweiten Reibbremse und die formschlüssige Führung der Außenlamellen der ersten Reibbremse.

Zur weiteren Erläuterung der Erfindung wird auf die Zeichnung verwiesen, in der ein Ausführungsbeispiel vereinfacht dargestellt ist. Es zeigen
- Fig. 1: eine schematische Darstellung eines erfindungsgemäß ausgebildeten Automatgetriebes,
- Fig. 2: eine Schaltlogig des Automatgetriebes der Fig. 1 und
- Fig. 3: einen Längsschnitt durch einen Teil eines gemäß Fig. 1 ausgebildeten Automatgetriebes im Bereich seines reduzierten Planeten-Koppelgetriebes und diesem zugeordneter Schaltkupplungen und Reibbremsen.

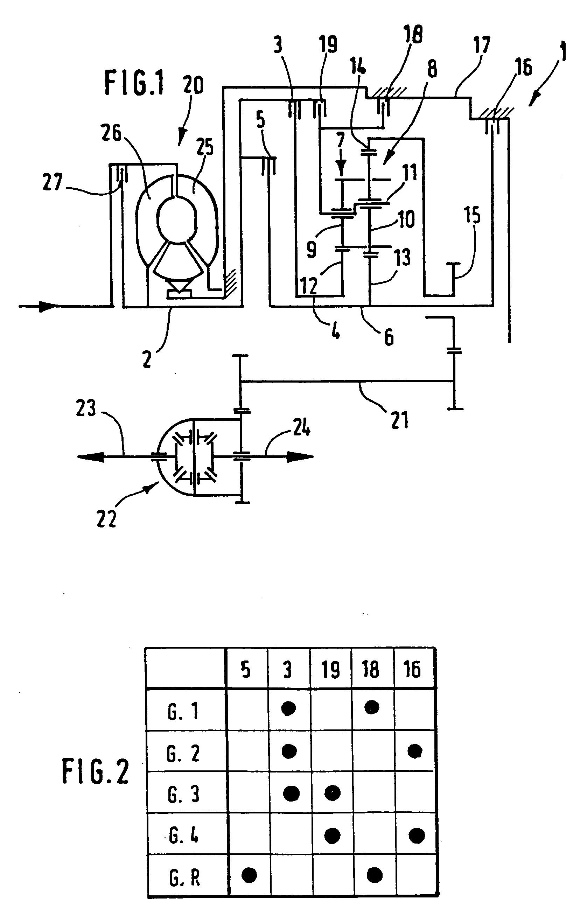

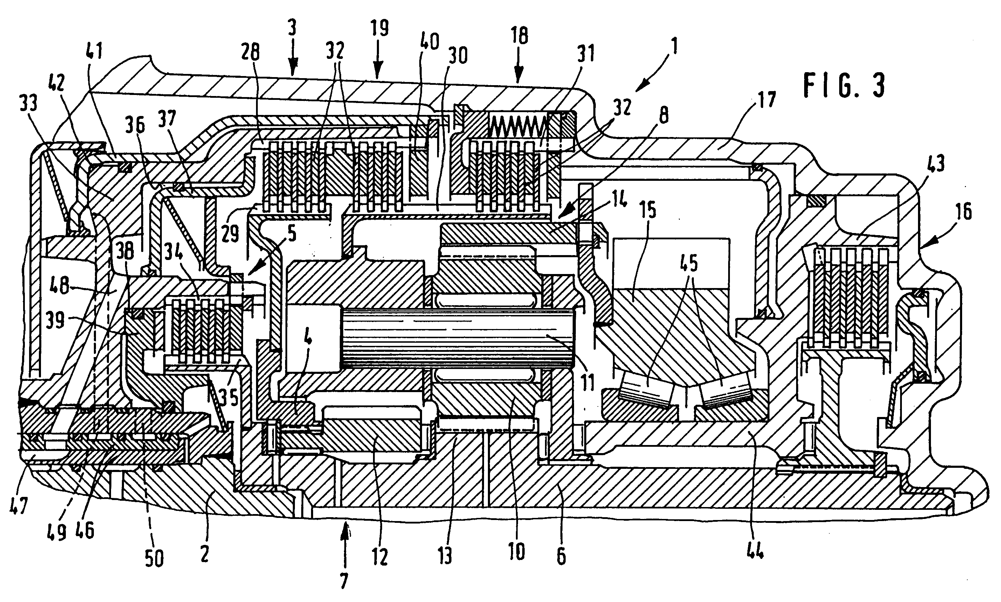

In den Fig. 1 und 3 ist mit 1 ein Automatgetriebe bezeichnet, dessen Eingangswelle 2 über eine erste Schaltkupplung 3 mit einer Hohlwelle 4 verbindbar ist. Außerdem kann die Eingangswelle 2 über eine zweite Schaltkupplung 5 mit einer Zwischenwelle 6 verbunden werden. Das Automatgetriebe 1 weist ferner ein reduziertes Planeten-Koppelgetriebe der Bauart Ravigneaux mit einem ersten Planetensatz 7 und einem zweiten Planetensatz 8 auf. Planetenräder 9 des ersten Planetensatzes 7 kämmen dabei mit Planetenrädern 10 des zweiten Planetensatzes 8, und beide Planetensätze 7 und 8 weisen einen gemeinsamen Steg 11 auf.

Die Hohlwelle 4 nimmt drehfest ein inneres Zentralrad 12 des ersten Planetensatzes 7 auf, während auf der Zwischenwelle 6 ein Sonnenrad 13 des zweiten Planetensatzes 8 befestigt ist. Außerdem befinden sich die Planetenräder 10 des zweiten Planetensatzes 8 mit einem Hohlrad 14 im Eingriff, an welchem wiederum ein getriebeausgangsseitiges Abtriebszahnrad 15 befestigt ist. Die als Vollwelle ausgebildete Zwischenwelle 6 ist durch dieses Abtriebszahnrad 15 hindurchgeführt und nimmt an ihrem getriebeausgangsseitigen Ende eine erste Reibbremse 16 auf, mittels welcher sie an einem Getriebegehäuse 17 festlegbar ist.

Zwischen dem Steg 11 und dem Getriebegehäuse 17 ist eine zweite Reibbremse 18 angeordnet. Schließlich kann der Steg 11 über eine dritte Schaltkupplung 19 mit der Eingangswelle 2 verbunden werden.

Wie aus der Fig. 1 hervorgeht, wird das Automatgetriebe 1 über einen hydrodynamischen Drehmomentwandler 20 von einer nicht näher dargestellten Brennkraftmaschine angetrieben. Diese Brennkraftmaschine samt Automatgetriebe 1 sollen dabei frontseitig quer in ein Kraftfahrzeug eingebaut sein, wobei der Fig. 1 zufolge vom Abtriebszahnrad 15 über ein Vorgelege 21 ein Antrieb eines Vorderachsdifferentials 22 erfolgt. Von diesem Vorderachsdifferential 22 zweigen die nicht dargestellten Vorderräder des Kraftfahrzeugs antreibende Halbwellen 23 und 24 ab. Der hydrodynamische Drehmomentwandler 20 weist ein Pumpenrad 25 und ein Turbinenrad 26 auf, wobei eine Überbrückungskupplung 27, die eine reibschlüssige Verbindung von Pumpen- und Turbinenrad 25, 26 herstellt, für eine schlupffreie Übertragung des Antriebsdrehmoments von der Brennkraftmaschine zur Eingangswelle 2 des Automatgetriebes 1 sorgt.

In der Fig. 2 ist die Schaltlogik des in den Fig. 1 und 3 dargestellten Automatgetriebes 1 aufgeführt. Dieser Schaltlogik ist zu entnehmen, welche Schaltkupplungen und Reibbremsen in den einzelnen Gangstufen G1 bis G4 bzw. GR betätigt sind. In einer ersten mit G1 bezeichneten Gangstufe sind die Schaltkupplung 3 und die Reibbremse 18 betätigt, so daß von der Eingangswelle 2 aus bei feststehendem Steg 11 vom inneren Zentralrad 12 des ersten Planetensatzes 7 über die mit diesen kämmenden Planetenräder 10 des zweiten Planetensatzes 8 das Hohlrad 14 und schließlich das Abtriebszahnrad 15 angetrieben wird. In dieser ersten Gangstufe G1 wird das Motorbremsmoment ausgenutzt; der Reibbremse 18 kann allerdings in bekannter Weise auch ein Freilauf parallel geschaltet sein, so daß in der ersten Gangstufe eine Freilaufwirkung des Getriebes vorhanden ist.

Beim Hochschalten aus der ersten Gangstufe G1 in die zweite Gangstufe G2 werden die zweite Reibbremse 18 gelöst und die erste Reibbremse 16 betätigt. Folglich ist das Sonnenrad 13 des zweiten Planetensatzes 8 festgelegt, und es erfolgt wiederum ein Antrieb vom inneren Zentralrad 12 über die miteinander kämmenden Planetenräder 9 und 10 bei frei drehbarem Steg 11 auf das Hohlrad 14 und somit auf das Abtriebszahnrad 15.

In der dritten Gangstufe G3 sind die Schaltkupplungen 3 und 19 betätigt, und es erfolgt beim Antrieb der beiden Planetensätze 7 und 8 im Block ein direkter Durchtrieb zum Abtriebszahnrad 15. In einer vierten Gangstufe G4 sind die Schaltkupplung 19 und die erste Reibbremse 16 betätigt. Dabei wird von der Eingangswelle 2 aus der Steg 11 angetrieben, und für das Untersetzungsverhältnis dieses als Overdrive ausgebildeten vierten Ganges ist allein der zweite Planetensatz 8 ausgelegt.

Schließlich werden in einer Rückwärtsgangstufe, die in der Schaltlogik mit GR bezeichnet ist, die Schaltkupplung 5 und die Reibbremse 18 eingerückt. Es erfolgt somit ein Antrieb der Zwischenwelle 6 und des mit dieser verbundenen Sonnenrades 13. Das Sonnenrad 13 treibt die Planetenräder 10 des zweiten Planetensatzes 8 bei festgelegtem Steg 11 an, wobei ein Abtrieb vom Hohlrad 14 auf das Abtriebszahnrad 15 erfolgt.

Den Fig. 1 und 3 ist zu entnehmen, daß aufgrund der Anordnung der Zwischenwelle 6 als zentrale Vollwelle, die getriebeausgangsseitig durch das Abtriebszahnrad 15 hindurchgeführt die erste Reibbremse 16 aufnimmt, ein klar gegliedertes Automatgetriebe geschaffen ist, welches eines geringen baulichen Aufwandes bedarf. Im Vergleich zu bislang bekannten Ausführungen kann auf eine Hohlwelle verzichtet werden, so daß für die Gestaltung der beiden Planetensätze 7 und 8 günstigere Möglichkeiten der Getriebeabstufung und der Übertragung höherer Antriebsmomente bestehen.

Aus der Fig. 3 geht weiterhin hervor, daß die erste Schaltkupplung 3 und die dritte Schaltkupplung 19 einen gemeinsamen Außenlamellenträger 28 aufweisen. Ein über die Hohlwelle 4 mit dem inneren Zentralrad 12 verbundener Innenlamellenträger 29 der Schaltkupplung 3 weist die gleichen radialen Abmessungen auf, wie ein gemeinsamer Innenlamellenträger 30 der Schaltkupplung 19 und der Reibbremse 18. Da ein Außenlamellenträger 31 der Reibbremse 18 wiederum bezüglich seiner Abmessungen mit dem Außenlamellenträger 28 übereinstimmt, ergeben sich absolut identische Kupplungs- bzw. Bremslamellen 32 für die Schaltkupplungen 3 und 19 sowie die Reibbremse 18.

Der Außenlamellenträger 28 ist Bestandteil eines Tragelements 33, welches drehfest mit der Eingangswelle 2 verbunden ist. Dieses Tragelement 33 nimmt an seiner getriebeeingangsseitigen Stirnseite einen Außenlamellenträger 34 der Schaltkupplung 5 auf, während ein Innenlamellenträger 35 dieser Schaltkupplung 5 mit der Zwischenwelle 6 verbunden ist. An dieser getriebeeingangsseitigen Stirnseite des Tragelements 33 sind außerdem im radial äußeren Bereich ein Stellzylinder 36 mit Betätigungskolben 37 der Schaltkupplung 3 angeordnet. Eine Wandung des Stellzylinders 36 ist dabei als gemeinsames Bauteil mit dem Außenlamellenträger 34 der Schaltkupplung 5 hergestellt. An der gleichen Stirnseite ist im Tragelement 33, radial umgeben vom Außenlamellenträger 34 der Schaltkupplung 5, deren Stellzylinder 38 mit Betätigungskolben 39 angeordnet.

Eine Druckscheibe 40, die auf die Kupplungslamellen 32 der dritten Schaltkupplung 19 wirkt, ist an einem den Außenlamellenträger 28 radial umgebenden Betätigungskolben 41 befestigt, wobei dieser Betätigungskolben 41 über einen an der getriebeeingangsseitigen Stirnseite liegenden Betätigungsraum 42 verlagerbar ist.

Die erste Reibbremse 16 hat einen Außenlamellenträger 43, der im Getriebegehäuse 17 drehfest geführt ist. Dieser Außenlamellenträger 43 ist mit einem sich axial erstreckenden Bund 44 versehen, auf welchem mittels Kegelrollenlager 45 das Abtriebszahnrad 15 gelagert ist. Für die Zuleitung von Druckmittel in die Stellzylinder 36 und 38 sowie dem Betätigungsraum 42 sind auf der Eingangswelle 2 Verteilerhülsen 46 vorgesehen, die über winkelversetzte axiale Zuleitungen 47, von denen in der Darstellung nur eine sichtbar ist, Druckmittel in die Druckmittelbohrungen 48, 49 und 50 leiten.

Die in der Fig. 3 dargestellte Ausbildung des Automatgetriebes weist unter anderem folgende Vorteile auf: Das auf der Eingangswelle 2 drehfest angeordnete Tragelement 33 übernimmt gleichzeitig die Funktionen als Außenlamellenträger 28 der Schaltkupplungen 3 und 19, als Außenlamellenträger 34 der Schaltkupplung 5 und nimmt dabei die Stellzylinder 36, 38 und 42 dieser Schaltkupplungen 3, 5 und 19 auf. Dadurch ergibt sich ein sehr kompakter Aufbau der Betätigungselemente, verbunden mit einem geringen baulichen Aufwand für deren Herstellung. Über das sich mit der Eingangswelle 2 drehende Tragelement 33 kann in vorteilhafter Weise über die Verteilerhülsen 46 ohne Dichtprobleme das Druckmittel in die vorgenannten Stellzylinder 36, 38 und 42 geleitet werden. Der bauliche Aufwand wird weiterhin dadurch verringert, daß für die Schaltkupplungen 3 und 19 sowie die Schaltkupplung 19 und die Reibbremse 18 gemeinsame Außenlamellenträger 28 sowie gemeinsame Innenlamellenträger 30 vorgesehen sind. Die Zwischenwelle 6 bedarf keiner aufwendigen Lagerung, da die erste Reibbremse 16 über den sich in axialer Richtung erstreckenden Bund 44 des Außenlamellenträgers 43 im Getriebegehäuse 17 gelagert ist.

### Bezugszeichen

- 1: Automatgetriebe
- 2: Eingangswelle
- 3: erste Schaltkupplung
- 4: Hohlwelle
- 5: zweite Schaltkupplung
- 6: Zwischenwelle
- 7: erster Planetensatz
- 8: zweiter Planetensatz
- 9: Planetenräder von 7
- 10: Planetenräder von 8
- 11: Steg
- 12: inneres Zentralrad von 7
- 13: Sonnenrad von 8
- 14: Hohlrad von 8
- 15: Abtriebszahnrad
- 16: erste Reibbremse
- 17: Getriebegehäuse
- 18: zweite Reibbremse
- 19: dritte Schaltkupplung
- 20: hydrodynamischer Drehmomentwandler
- 21: Vorgelege
- 22: Vorderachsdifferential
- 23: Halbwelle
- 24: Halbwelle
- 25: Pumpenrad von 20
- 26: Turbinenrad von 20
- 27: Überbrückungskupplung
- 28: Außenlamellenträger von 3 und 19
- 29: Innenlamellenträger von 3
- 30: Innenlamellenträger von 18 und 19
- 31: Außenlamellenträger von 18
- 32: Kupplungs- bzw. Bremslamellen
- 33: Tragelement
- 34: Außenlamellenträger von 5
- 35: Innenlamellenträger von 5
- 36: Stellzylinder von 3
- 37: Betätigungskolben von 3
- 38: Stellzylinder von 5
- 39: Betätigungskolben von 5
- 40: Druckscheibe von 19
- 41: Betätigungskolben von 19
- 42: Betätigungsraum
- 43: Außenlamellenträger von 16
- 44: Bund von 16
- 45: Kegelrollenlager
- 46: Verteilerhülsen
- 47: Zuleitungen
- 48: Druckmittelbohrung
- 49: Druckmittelbohrung
- 50: Druckmittelbohrung

## Patentansprüche

1. Automatgetriebe (1) für Kraftfahrzeuge mit einem reduzierten Planeten-Koppelgetriebe, dessen Planetenräder (9 und 10) eines ersten und zweiten Planetensatzes (7 und 8) miteinander kämmen und einen gemeinsamen Steg (11) aufweisen, wobei ein auf einer Hohlwelle (4) drehfestes inneres Zentralrad (12) des ersten Planetensatzes (7) über eine erste Schaltkupplung (3) sowie ein auf einer Zwischenwelle (6) drehfestes Sonnenrad (13) des zweiten Planetensatzes (8) über eine zweite Schaltkupplung (5) wahlweise mit einer Eingangswelle (2) kuppelbar sind bzw. die Zwischenwelle (6) über eine erste Reibbremse (16) abbremsbar ist, wobei der Steg (11) an seinem getriebeeingangsseitigen Ende mit einer zweiten Reibbremse (18) und ein Hohlrad (14) des zweiten Planetensatzes (8) mit einem Abtriebszahnrad (15) des Automatgetriebes (1) verbunden sind, und wobei die Zwischenwelle (6) als zentrische Vollwelle ausgebildet ist, die durch das Abtriebszahnrad (15) hindurchgeführt ist, und die erste Reibbremse (16) an dem sich getriebeausgangsseitig über das Antriebszahnrad (15) hinaus erstreckenden Abschnitt der Zwischenwelle (6) angreift, dadurch **gekennzeichnet,** daß der Steg (11) über eine dritte Schaltkupplung (19), die in getriebeausgangsseitiger Richtung hinter der ersten und zweiten Schaltkupplung (3 und 5) liegt, mit der Eingangswelle (2) verbindbar ist.

2. Automatgetriebe für Kraftfahrzeuge nach Anspruch 1, dadurch **gekennzeichnet,** daß die zweite Reibbremse (18) radial zu den beiden Planetensätzen (7 und 8) des Planeten-Koppelgetriebes angeordnet ist.

3. Automatgetriebe für Kraftfahrzeuge nach Anspruch 1, dadurch **gekennzeichnet,** daß die zweite Reibbremse (18) und die dritte Schaltkupplung (19) einen gemeinsamen Innenlamellenträger (30) aufweisen.

4. Automatgetriebe für Kraftfahrzeuge nach Anspruch 1, dadurch **gekennzeichnet,** daß die erste und die dritte Schaltkupplung (3 und 19) gegenüber der Eingangswelle (2) einen gemeinsamen Außenlamellenträger (28) aufweisen.

5. Automatgetriebe für Kraftfahrzeuge nach einem der Ansprüche 3 und 4, dadurch **gekennzeichnet,** daß die Kupplungs- und Bremslamellen (32) der ersten und dritten Schaltkupplung (3 und 19) sowie der zweiten Reibbremse (18) identisch ausgebildet sind.

6. Automatgetriebe für Kraftfahrzeuge nach Anspruch 1, dadurch **gekennzeichnet,** daß ein auf der Eingangswelle (2) angeordnetes Tragelement (33) mit Stellzylindern (36, 38 und 42) für die erste und dritte Schaltkupplung (3 und 19) sowie die zweite Reibbremse (18) versehen ist.

7. Automatgetriebe für Kraftfahrzeuge nach Anspruch 6, dadurch **gekennzeichnet,** daß das Tragelement (33), an seinem äußeren Umfang in axialer Richtung vorkragend, den Außenlamellenträger (28) für die erste und dritte Schaltkupplung (3 und 19) bildet und daß jeweils an einer der beiden Stirnseiten des Tragelements (33) deren Stellzylinder (36 und 42) ausgebildet sind.

8. Automatgetriebe für Kraftfahrzeuge nach Anspruch 1, dadurch **gekennzeichnet,** daß ein Außenlamellenträger (43) der ersten Reibbremse (16) als Bauelement ausgebildet ist, das einen sich axial erstreckenden Bund (44) aufweist, auf dem das Abtriebszahnrad (15) gelagert ist.

9. Automatgetriebe für Kraftfahrzeuge nach Anspruch 1, dadurch **gekennzeichnet,** daß ein Stellzylinder der zweiten Reibbremse (18) an einer Stirnseite des Außenlamellenträgers (43) der ersten Reibbremse (16) ausgebildet ist.

## Claims

1. Automatic gearbox (1) for motor vehicles, having a reduced planetary coupled gear, whose planet wheels (9 and 10) of a first and second planetary gear train (7 and 8) mesh and have a common web (11), wherein in a selective manner an inner central wheel (12) of the first planetary gear train (7) non-rotatably fixed to a hollow shaft (4) is capable of being coupled to an input shaft (2) via a first clutch (3), and a sun gear (13) - non-rotatably fixed to an intermediate shaft (6) - of the second planetary gear train (8) is capable of being coupled to an input shaft (2) via a second clutch (5), or the intermediate shaft (6) is capable of being braked via a first friction brake (16), and wherein the web (11) is connected at its end at the gearbox input side to a second friction brake (18) and a hollow wheel (14) of the second planetary gear train (8) with a power take-off pinion (15) of the automatic gearbox (1), and wherein the intermediate shaft (6) is formed as a central solid shaft and passes through the power take-off pinion (15) and in that the first friction brake (16) acts on the section of the intermediate shaft (6) extending beyond the power take-off pinion (15) on the gearbox output side, characterised in that the web (11) is connectable to the input shaft (2) via a third clutch (19), which lies behind the first and second clutches (3 and 5) in the direction of the gearbox output side.

2. Automatic gearbox for motor vehicles according to claim 1, characterised in that the second friction brake (18) is disposed radially to the two planetary gear trains (7 and 8) of the planetary coupled gear.

3. Automatic gearbox for motor vehicles according to claim 1, characterised in that the second friction brake (18) and the third clutch (19) have a common inner disc carrier (30).

4. Automatic gearbox for motor vehicles according to claim 1, characterised in that the first and third clutch (3 and 19) have a common outer disc carrier (28) with respect to the input shaft (2).

5. Automatic gearbox for motor vehicles according to one of claims 3 or 4, characterised in that the clutch and brake discs (32) of the first and third clutches (3 and 19) and of the second friction brake (18) are identically formed.

6. Automatic gearbox for motor vehicles according to claim 1, characterised in that a support element (33) disposed on the input shaft (2) is provided with actuating cylinders (36, 38 and 42) for the first and third clutches (3 and 19) and the second friction brake (18).

7. Automatic gearbox for motor vehicles according to claim 6, characterised in that the support element (33) forms at its outer circumference, projecting in the axial direction, the outer disc carrier (28) for the first and third clutches (3 and 19), and in that the actuating cylinders (36 and 42) are formed on each of the two end faces of the support element (33) respectively.

8. Automatic gearbox for motor vehicles according to claim 1, characterised in that an outer disc carrier (43) of the first friction brake (16) is formed as a structural element having an axially extending collar (44) on which the power take-off pinion (15) is mounted.

9. Automatic gearbox for motor vehicles according to claim 1, characterised in that one actuating cylinder of the second friction brake (18) is formed at one end of the outer disc carrier (43) of the first friction brake (16).

## Revendications

1. Transmission automatique (1) pour véhicules à moteur, comportant une boîte planétaire de couplage à réduction où des satellites (9 et 10) d'un premier et d'un second train planétaire (7 et 8) s' engrènent les uns sur les autres et ont un porte-satellites commun (11), où un pignon planétaire intérieur (12) du premier train planétaire (7), solidaire en rotation d'un arbre creux (4), peut être couplé sélectivement à un arbre d'entrée (2) au moyen d'un premier embrayage (3), un pignon planétaire (13) du second train planétaire (8), solidaire en rotation d'un arbre intermédiaire (6), peut être couplé sélectivement à l'arbre d'entrée (2) au moyen d'un deuxième embrayage (5), et l'arbre intermédiaire (6) peut être bloqué au moyen d'un premier frein à friction (16), où le porte-satellites (11) est raccordé à un deuxième frein à friction (18) à son extrémité du côté de l'entrée de la transmission et une couronne (14) du second train planétaire (8) est raccordée à un pignon de sortie (15) de la transmission automatique (1), et où l'arbre intermédiaire (6) est formé par un arbre central plein qui passe à travers le pignon de sortie (15), et le premier frein à friction (16) attaque la partie de l'arbre intermédiaire (6) qui s'étend au-delà du pignon de sortie (15) du côté de la sortie de la transmission, **caractérisée** en ce que le porte-satellites (11) peut être raccordé à l'arbre d'entrée (2) au moyen d'un troisième embrayage (19) qui se trouve derrière le premier et le deuxième embrayage (3 et 5) en direction de la sortie de la transmission.

2. Transmission selon la revendication 1, **caractérisée** en ce que le deuxième frein (18) est disposé dans une position radiale par rapport aux deux trains planétaires (7 et 8) de la boîte planétaire de couplage.

3. Transmission selon la revendication 1, **caractérisée** en ce que le deuxième frein (18) et le troisième embrayage (19) comportent un porte-disques intérieur commun (30).

4. Transmission selon la revendication 1, **caractérisée** en ce que le premier et le troisième embrayage (3 et 19) comportent un porte-disques extérieur commun (28) du côté de l'arbre d'entrée (2).

5. Transmission selon l'une des revendications 3 et 4, **caractérisée** en ce que les disques (32) d'embrayage et de frein du premier et du troisième embrayage (3 et 19) et du deuxième frein (18) sont identiques.

6. Transmission selon la revendication 1, **caractérisée** en ce qu'un élément porteur (33) monté sur l'arbre d'entrée (2) est pourvu de vérins (36, 38 et 42) pour l'actionnement du premier et du troisième embrayage (3 et 19) et du deuxième frein (18).

7. Transmission selon la revendication 6, **caractérisée** en ce que ledit élément porteur (33), sur sa partie périphérique extérieure proéminente axialement, constitue le porte-disques extérieur (28) pour le premier et le troisième embrayage (3 et 19) et en ce que les vérins (36 et 42) d' actionnement de ces embrayages sont disposés respectivement sur les deux faces frontales de l'élément porteur (33).

8. Transmission selon la revendication 1, **caractérisée** en ce qu'un porte-disques extérieur (43) du premier frein (16) est formé par un élément comportant un collet axial (44) sur lequel le pignon de sortie (15) est monté par un palier.

9. Transmission selon la revendication 1, **caractérisée** en ce qu'un vérin d' actionnement du deuxième frein (18) est disposé sur une face frontale du porte-disques extérieur (43) du premier frein (16).
